# EUROPÄISCHE PATENTSCHRIFT

(11) **EP 3 574 335 B1**
(45) Veröffentlichungstag und Bekanntmachung des Hinweises auf die Patenterteilung: **14.09.2022**
(21) Anmeldenummer: 17822206.3
(22) Anmeldetag: 12.12.2017
(51) Int. Cl.: G01S 7/02, G01S 13/931, G01S 13/34

(54) **VERFAHREN ZUR ERMITTLUNG VON WENIGSTENS EINER OBJEKTINFORMATION WENIGSTENS EINES OBJEKTES, DAS MIT EINEM RADARSYSTEM INSBESONDERE EINES FAHRZEUGS ERFASST WIRD, RADARSYSTEM UND FAHRERASSISTENZSYSTEM**
METHOD FOR DETERMINING AT LEAST ONE PIECE OF OBJECT INFORMATION ABOUT AT LEAST ONE OBJECT SENSED BY MEANS OF A RADAR SYSTEM, IN PARTICULAR OF A VEHICLE, RADAR SYSTEM, AND DRIVER ASSISTANCE SYSTEM
PROCÉDÉ POUR DÉTERMINER AU MOINS UNE INFORMATION SUR AU MOINS UN OBJET DÉTECTÉ PAR UN SYSTÈME DE RADAR EN PARTICULIER D'UN VÉHICULE, SYSTÈME DE RADAR ET SYSTÈME D'AIDE À LA CONDUITE

(30) Priorität: 30.01.2017 DE 102017101763
(43) Veröffentlichungstag der Anmeldung: 04.12.2019
(73) Patentinhaber: Valeo Schalter und Sensoren GmbH, 74321 Bietigheim-Bissingen (DE)
(72) Erfinder: STURM, Christian, 74321 Bietigheim-Bissingen (DE)
(74) Vertreter: Withopf, Kristina
(86) Internationale Anmeldenummer: PCT/EP2017/082347
(87) Internationale Veröffentlichungsnummer: WO 2018/137836

(56) Entgegenhaltungen:
- EP-A1- 2 876 460
- EP-A2- 2 417 475
- DE-A1-102013 210 256

## Beschreibung

### Technisches Gebiet

Die Erfindung betrifft die Ermittlung von wenigstens einer Objektinformation wenigstens eines Objekts und ist durch die unabhängigen Ansprüche 1, 18 und 19 definiert. Bevorzugte Ausführungsformen werden durch die abhängigen Ansprüche definiert.

### Stand der Technik

Aus der EP 2 417 475 B1 ist ein Radarsystem zum Einsatz für Fahrerassistenzsysteme im Kraftfahrzeug bekannt. Das Radarsystem besitzt eine Sendeantenne zur Abstrahlung von Sendesignalen und eine Mehrzahl insbesondere von Empfangsantennen zum gleichzeitigen Empfang von an Objekten reflektierten Sendesignalen. Damit die Entfernung von Objekten gemessen werden kann, wird eine Frequenz eines Hochfrequenz-Oszillators und damit der Sendesignale sehr schnell linear verändert; man spricht dabei von einer Frequenzrampe. Die Frequenzrampen werden periodisch wiederholt; insgesamt gibt es in einem Zahlenbeispiel 1024 Frequenzrampen. Während jeder Frequenzrampe werden in allen Empfangskanälen die Empfangssignale an einem A/D-Wandler z.B. 512 mal jeweils im Abstand von z.B. 25 ns abgetastet. Dann wird über die z.B. 512 Abtastwerte jeder Frequenzrampe und jedes Empfangskanals eine diskrete Fouriertransformation (DFT) in Form einer schnellen Fouriertransformation (FFT = Fast Fourier Transform) gebildet. Dadurch kann man Objekte in unterschiedlichen Entfernungen, welche zu unterschiedlichen Frequenzen führen, trennen. Jede der diskreten Frequenzstützstellen j der DFT korrespondiert zu einer Entfernung r und kann deshalb analog zu Pulsradaren auch als Entfernungstor bezeichnet werden. Mehrere Objekte mit unterschiedlicher Relativgeschwindigkeit im selben Entfernungstor werden dadurch getrennt, dass für jeden Empfangskanal und jedes Entfernungstor über die in den z.B. 1024 Frequenzrampen anfallenden komplexen Spektralwerte eine zweite DFT gerechnet wird. Jede diskrete Stützstelle dieser zweiten DFT korrespondiert zu einem Satz von Dopplerfrequenzen. Bei der betrachteten beispielhaften Auslegung gibt es aus dem Satz möglicher Relativgeschwindigkeiten immer nur eine für den Straßenverkehr sinnvolle beziehungsweise mögliche.

Der Stand der Technik umfasst des Weiteren die EP 2876460 A1 und die DE 10 2013 210256 A1.

Der Erfindung liegt die Aufgabe zugrunde, ein Verfahren, ein Radarsystem und ein Fahrerassistenzsystem der eingangs genannten Art zu gestalten, bei denen etwaige Mehrdeutigkeiten in Bezug auf Objektinformationen, insbesondere Abstand, Geschwindigkeit und/oder Richtung des wenigstens einen Objektes relativ zum Radarsystem, einfacher und/oder zuverlässiger aufgelöst werden können.

### Offenbarung der Erfindung

Diese Aufgabe wird durch den Gegenstand der unabhängigen Ansprüche gelöst.

Erfindungsgemäß wird wenigstens ein Zielsignal einem entsprechenden Sendesignal zugeordnet und so validiert. Durch die erfindungsgemäße Phasenmodulation der Sendesignale werden die entsprechenden von den verschiedenen Sendern resultierenden Zielsignale, insbesondere in der Doppler-Dimension betrachtet, gegeneinander verschoben und bilden so ein eindeutiges Gesamtmuster. Je nach Anzahl der verfügbaren Modulationsstufen der Phasenmodulation können damit auch deutlich mehr als zwei Sender gleichzeitig eingesetzt werden. Die Sendesignale sind dabei am Ausgang der zweidimensionalen Fourier-Transformation, insbesondere FFT, vollständig orthogonal.

Die Orthogonalität kann dabei vorzugsweise zwischen allen ersten Sendesignalen und allen zweiten Sendesignalen jeweils auch untereinander bestehen. Das Verfahren lässt sich unter Nutzung höherstufiger Modulationsverfahren auf entsprechend viele gleichzeitig aktive Sender erweitern.

Vorteilhafterweise kann das wenigstens eine zweite Sendesignal mittels einer Phasenmodulation gegenüber dem wenigstens einen ersten Sendesignal so codiert werden, dass eine zumindest temporäre signaltechnische Orthogonalität zwischen den Sendesignalen erzielt wird.

Durch die erfindungsgemäße Validierung wenigstens eines Zielsignals können die von den einzelnen Sendern gesendeten Sendesignale auf der Empfängerseite voneinander getrennt werden. Dabei ist es nicht erforderlich, die Phasenwerte der Sendesignale zu korrigieren. Eine entsprechende Fourier-Transformation kann so direkt ein Zielsignal mit den entsprechend korrekten Objektinformationen, insbesondere Entfernungen und/oder Relativgeschwindigkeiten, liefern. Insgesamt können Mehrdeutigkeiten zwischen dem wenigstens einen ersten Sendesignal und dem wenigstens einen zweiten Sendesignal beziehungsweise den entsprechenden Zielsignalen gelöst werden.

Der wenigstens eine erste Sender und der wenigstens eine zweite Sender sind gleichzeitig aktiv. Auf diese Weise kann die Ermittlung der Objektinformationen beschleunigt werden.

Die reflektierten Echos werden auf der Empfängerseite als Empfangssignale empfangen und sofern erforderlich in eine für eine elektronische Steuer- und/oder Auswerteeinrichtung verwertbare Form gebracht. Sofern die Sendesignale und die resultierenden Echos eine Signalart aufweisen, welche nicht direkt mit der entsprechenden elektronischen Steuer- und/oder Auswerteeinrichtung verarbeitet werden kann, werden die Empfangssignale in eine elektronisch verwertbare Form gebracht. Andernfalls ist keine entsprechende Anpassung, insbesondere Umwandlung, der Empfangssignale erforderlich. Auf diese Weise können die Empfangssignale mittels der elektronischen Steuer- und/oder Auswerteeinrichtung direkt oder gegebenenfalls nach entsprechender Anpassung verarbeitet werden.

Das Verfahren kann vorteilhafterweise mit wenigstens einem Mittel auf softwaremäßigem und/oder hardwaremäßigem Wege realisiert sein. Das Verfahren kann softwaremäßig und/oder hardwaremäßig in Kombination mit der Steuer- und/oder Auswerteeinrichtung realisiert sein. Die Mittel zum Ausführen des Verfahrens können in einer ohnehin benötigten Steuer- und/oder Auswerteeinrichtung des Radarsystems enthalten sein.

Vorteilhafterweise kann das Radarsystem eine schnelle Frequenzmodulation nutzen. Dabei werden hintereinander mehrere sogenannte Chirps oder Frequenzrampen als Sequenzen ausgesendet.

Vorteilhafterweise kann die Phasenmodulation im Takt der Chirps (Chirp-Takt) erfolgen. Auf diese Weise kann eine erforderliche Frequenz der Codesequenz und damit eine erforderliche Signalbandbreite entsprechend gering gehalten werden.

Das wenigstens eine zweite Sendesignal wird mittels einer Phasenmodulation gegenüber dem wenigstens einen ersten Sendesignal so codiert, dass eine zumindest temporäre signaltechnische Orthogonalität zwischen dem wenigstens einen ersten Sendesignal und dem wenigstens einen zweiten Sendesignal erzielt wird. Auf diese Weise kann eine eindeutige Unterscheidung des wenigstens einen ersten Sendesignals von dem wenigstens einen zweiten Sendesignals auf der Empfängerseite vereinfacht werden.

Aus dem Ergebnis der wenigstens einen zweidimensionalen diskreten Fourier-Transformation kann eine Mehrzahl von Zielsignalen ermittelt werden, deren Anzahl pro physikalisch vorhandenen Ziel höchstens der Gesamtzahl der ersten und zweiten Sendesignale entspricht. Dabei kann ein physikalisch vorhandenes Ziel ein erfasstes Objekt sein. Zielsignale können auch als Radarziele bezeichnet werden.

Bei den mit dem Radarsystem erfassbaren Objekten kann es sich um stehende oder bewegte Objekte, insbesondere um andere Fahrzeuge, Personen, Hindernisse, Fahrbahnunebenheiten, insbesondere Schlaglöcher oder Steine, Fahrbahnbegrenzungen oder dergleichen, handeln.

Die Erfindung kann bei einem Fahrzeug, insbesondere einem Kraftfahrzeug, verwendet werden. Vorteilhafterweise kann die Erfindung bei einem Landfahrzeug, insbesondere einem Personenkraftwagen, Lastkraftwagen, einem Bus, einem Motorrad oder dergleichen, verwendet werden. Die Erfindung kann auch bei autonomen oder wenigstens teilweise autonomen Fahrzeugen eingesetzt werden.

Das Radarsystem kann vorteilhafterweise mit wenigstens einer elektronischen Steuervorrichtung des Fahrzeugs, insbesondere einem Fahrerassistenzsystem und/oder einer Fahrwerksregelung und/oder einer Fahrer-Informationseinrichtung, verbunden oder Teil einer solchen sein. Auf diese Weise können die mit dem Radarsystem erfassten Objektinformationen, insbesondere Abstände, Richtungen und/oder Geschwindigkeiten eines Objektes relativ zum Fahrzeug, an die Steuervorrichtung übermittelt und zur Beeinflussung von Fahrfunktionen, insbesondere der Geschwindigkeit, einer Bremsfunktion, einer Lenkungsfunktion und/oder einer Ausgabe eines Hinweis- und/oder Warnsignals insbesondere für den Fahrer, verwendet werden.

Bei einer vorteilhaften Ausgestaltung des Verfahrens kann auf der Empfängerseite aus dem Ergebnis der wenigstens einen zweidimensionalen diskreten Fourier-Transformation eine Mehrzahl von Zielsignalen, deren Anzahl pro physikalisch vorhandenem Ziel höchstens der Gesamtzahl der ersten und zweiten Sendesignale entspricht, und deren Gesamtmuster ermittelt werden.

Bei einer weiteren vorteilhaften Ausgestaltung des Verfahrens können die Zielsignale entsprechend dem Gesamtmuster den Sendesignalen jeweils zugeordnet werden und so kann wenigstens eines der Zielsignale validiert werden.

Bei einem weiteren vorteilhaften Ausgestaltung des Verfahrens kann aus wenigstens einem validierten Zielsignal wenigstens eine Objektinformation ermittelt werden.

Bei einer weiteren vorteilhaften Ausgestaltung des Verfahrens kann aus wenigstens einem ersten validierten Zielsignal, welches wenigstens einem ersten Sendesignal zugeordnet ist, und aus wenigstens einem zweiten validierten Zielsignal, welches wenigstens einem zweiten Sendesignal zugeordnet ist, wenigstens eine Objektinformation ermittelt werden. Auf diese Weise können sowohl das wenigstens eine erste Sendesignal als auch das wenigstens eine zweite Sendesignal, und entsprechend die Zielsignale zur Ermittlung von Objektinformationen herangezogen werden. So können unterschiedliche Objektinformationen direkter ermittelt und etwaige Mehrdeutigkeiten zuverlässige gelöst werden.

Bei einer weiteren vorteilhaften Ausgestaltung des Verfahrens kann aus wenigstens einem validierten Zielsignal wenigstens eine Objektinformation in Form einer Geschwindigkeit und/oder einer Position, insbesondere ein Abstand und/oder eine Richtung, des wenigstens einen Objektes relativ zu dem Radarsystem ermittelt werden. Auf diese Weise können mit dem Radarsystem Informationen über das wenigstens eine Objekt gewonnen werden, welche insbesondere zur Steuerung von Fahrfunktionen eines Fahrzeugs interessant sind.

Bei einer weiteren vorteilhaften Ausgestaltung des Verfahrens kann eine einzige zweidimensionale diskrete Fourier-Transformation, insbesondere eine einzige zweidimensionale schnelle Fourier-Transformation, ausgeführt werden. Auf diese Weise können mit nur einer einzigen zweidimensionalen insbesondere schnellen Fourier-Transformation Information sowohl aus dem wenigstens einen ersten Sendesignal als auch aus dem wenigstens einen zweiten Sendesignal verwertet werden. So kann das Verfahren effizienter ausgeführt werden.

Vorteilhafterweise kann eine Trennung der Signale in Form der Zielsignalen erst am Ausgang der Fourier-Transformation erfolgen. Auf diese Weise kann ein Rechenaufwand verringert werden. So kann auch eine höhere Anzahl von Sendern und entsprechenden Sendesignalen mit einem entsprechend geringen Rechenaufwand und Speicherbedarf verarbeitet werden.

Erfindungsgemäß wird das wenigstens eine zweite Sendesignal auf der Senderseite mittels einer höherstufigen Phasenumtastung codiert. Auf diese Weise kann eine signaltechnische Orthogonalität zwischen den Sendesignalen erzielt werden. Die binäre Phasenumtastung ist ein an sich bekanntes digitales Modulationsverfahren und wird in Fachkreisen auch als "Binary Phase-Shift Keying" (BPSK) bezeichnet. Bei der höherstufigen Phasenumtastung kann es sich um ein höherstufiges Modulationsverfahren, insbesondere eine Vierphasenmodulation (Q-PSK), eine Achtphasenmodulation (8-PSK), eine 16-Phasenmodulation (16-PSK) oder eine noch höherphasige Modulation, handeln. Bei der Vierphasenmodulation können Phasenlagen von 0°, 90°, 180° und 270° verwendet werden. Bei der Achtphasenmodulation können Phasenlagen von 0°, 45°, 90°, 135°, 180°, 225°, 270° und 315° verwendet werden. Es können auch kleinere Phaseninkremente oder Phasendekremente eingesetzt werden. Vorzugsweise kann dabei die entstehende Verschiebung einem ganzzahligen Vielfachen einer Doppler-Zelle entsprechen. Die Phaseninkremente oder Phasendekremente von einem Chirp zum nächsten können konstant sein. Bei jedem Sender kann eine andere Schrittgröße verwendet werden.

Vorteilhafterweise kann die Codierung des wenigstens einen zweiten Sendesignals im Takt der Frequenzrampen der Chirp-Sequenzen erfolgen. Auf diese Weise können die aufeinander folgenden linearen Frequenzrampen wahlweise mit den entsprechenden Phasenlagen ausgesendet werden. So können die Phasen derart umgetastet werden, dass die Sendesignale bei den Sendern über die gesamte Sequenzdauer betrachtet orthogonal sind.

Bei einer weiteren vorteilhaften Ausgestaltung des Verfahrens können bei der Phasenmodulation von mehreren zweiten Sendesignalen unterschiedliche Phaseninkremente für die jeweiligen zweiten Sendesignale verwendet werden. Auf diese Weise können die zweiten Sendesignale untereinander und zu dem wenigstens einen ersten Sendesignal orthogonal realisiert werden.

Vorteilhafterweise kann an jedem Sender, insbesondere jeder Sendeantenne, ein anderes insbesondere konstantes Phaseninkrement genutzt werden. So kann eine bessere Unterscheidbarkeit der Signale erreicht werden um Mehrdeutigkeiten zu verhindern.

Vorteilhafterweise kann bei der Phasenmodulation eine Phasenlage wenigstens eines zweiten Sendesignals von Chirp zu Chirp um ein konstantes Phaseninkrement erhöht oder Phasendekrement verringert werden. Bei der Phasenmodulation kann eine Phasenlage des Sendesignals innerhalb einer Chirp-Sequenz von einem Chirp zum nächsten jeweils um ein insbesondere konstantes Phaseninkrement erhöht oder Phasendekrement verringert werden.

Vorteilhafterweise kann bei der Phasenmodulation wenigstens eines zweiten Sendesignals ein Phaseninkrement oder Phasendekrement insbesondere kontinuierlich eingestellt werden. Auf diese Weise kann die Eindeutigkeit des Gesamtmusters der Zielsignale weiter verbessert werden.

Am Ausgang der Fourier-Transformation können erfindungsgemäß die Zielsignale der einzelnen Sender in Abhängigkeit der von Chirp zu Chirp hinzugefügten Phaseninkrementen oder Phasendekrementen in der Doppler-Dimension verschoben werden. Durch die unterschiedlichen Phaseninkrement oder Phasendekremente der einzelnen Sender kann die Gesamtmenge aller Zielsignale in einem zweidimensionalen Leistungsspektrum mit einem charakteristischen Gesamtmuster in der Doppler-Dimension abgebildet werden. Die Verschiebung jedes einzelnen Zielsignals kann folgendermaßen bestimmt werden: Verschiebung = phase_step_size/360 * unambiguous Doppler.

Das Gesamtmuster kann vorteilhafterweise mit einem sogenannten Korrelator detektiert werden. Auf diese Weise kann das Gesamtmuster einfacher erfasst und zur Weiterverarbeitung verwendet werden.

Durch geeignete Wahl der Phaseninkremente oder Phasendekremente können mit dem erfindungsgemäßen Verfahren Mehrdeutigkeiten vollständig vermieden werden.

Vorteilhafterweise kann wenigstens ein Sendesignal mit einem regelmäßig alternierenden Muster belegt werden. Auf diese Weise kann das wenigstens eine Sendesignal, insbesondere wenigstens ein zweites Sendesignal, von wenigstens einem anderen Sendesignal, insbesondere wenigstens einem ersten Sendesignal und/oder wenigstens einem weiteren zweiten Sendesignal, unterschieden und auf der Empfängerseite einfacher getrennt werden.

Bei einer weiteren vorteilhaften Ausgestaltung des Verfahrens kann wenigstens ein erstes Sendesignal mit konstanter Phase und wenigstens ein zweites Sendesignal mit wechselnder Phase ausgesendet werden. Auf diese Weise kann das wenigstens eine erste Sendesignal von dem wenigstens einen zweiten Sendesignal unterschieden werden.

Das Sendesignal, welches mit konstanter Phase ausgesendet wird, kann nach entsprechender Auswertung auf der Empfängerseite als Referenz bezüglich wenigstens einer Objektinformation dienen, ohne dass eine Korrektur der Phasenverschiebung erforderlich ist.

Vorteilhafterweise können weitere Sender vorgesehen sein, welche mit niedriger Frequenz und einem Phasenwechsel alternieren können. Dies hat den Vorteil, dass keine vergleichsweise hohen Frequenzen der kodierten Chirp-Sequenzen erforderlich sind. So kann das Verfahren einfacher, auch mit gängigen Steuer- und Auswerteeinrichtungen, insbesondere üblichen Chipsätzen, umgesetzt werden.

Bei einer weiteren vorteilhaften Ausgestaltung des Verfahrens kann das Verfahren mehrmals hintereinander, insbesondere zyklisch, durchgeführt werden. Auf diese Weise kann der Überwachungsbereich über einen längeren Zeitraum überwacht werden. Zusätzlich oder alternativ können die Ergebnisse der einzelnen Messzyklen miteinander verglichen werden und somit eine Validierung der Zielsignale verbessert und Mehrdeutigkeiten besser aufgelöst werden.

Vorteilhafterweise kann wenigstens ein Zielsignal über mehrere Messzyklen validiert werden. Ein derartiges Verfahren kann als "Tracking" bezeichnet werden. Durch Beobachtung von Änderungen mindestens einer Objektinformation, insbesondere eines Abstands des Objektes, über mehrere Messzyklen kann ermittelt werden, welche von mehreren anderen Objektinformationen, insbesondere Geschwindigkeiten, die aus ermittelten Zielsignalen bestimmt werden können, korrekt sind. Dabei kann zusätzlich die Kenntnis darüber genutzt werden, dass von zwei Objektinformationen, insbesondere zwei unterschiedliche Geschwindigkeiten, die für ein Zielsignal ermittelt werden, nur eine Objektinformation, also eine Geschwindigkeit, korrekt sein kann. Insgesamt können so Mehrdeutigkeiten in Bezug auf Zielsignale und darin enthaltenen Objektinformationen zuverlässiger aufgelöst werden.

Vorteilhafterweise kann das erfindungsgemäße Verfahren mit mehreren aktiven Sendern im Wechsel mit einem anderen Verfahren mit lediglich einem aktiven Sender durchgeführt werden. Die mit den beiden Verfahren jeweils ermittelten Zielsignale können miteinander verglichen werden und so die korrekten Zielsignale identifiziert und damit validiert werden.

Ferner wird die technische Aufgabe bei dem Radarsystem gemäß Anspruch 18 gelöst.

Erfindungsgemäß kann das wenigstens eine zweite Sendesignal mittels einer Phasenmodulation gegenüber dem wenigstens einen ersten Sendesignal so codiert werden, dass eine zumindest temporäre signaltechnische Orthogonalität zwischen den Sendesignalen erzielt wird.

Vorteilhafterweise kann aus dem Ergebnis der wenigstens einen zweidimensionalen diskreten Fourier-Transformation eine Mehrzahl von Zielsignalen, deren Anzahl pro physikalisch vorhandenem Ziel höchstens der Gesamtzahl der ersten und zweiten Sendesignale entspricht, und deren Gesamtmuster eindeutig werden.

Vorteilhafterweise können die Zielsignale entsprechend dem Gesamtmuster den Sendesignalen jeweils zugeordnet werden. So kann wenigstens eines der Zielsignale validiert werden.

Vorteilhafterweise kann aus wenigstens einem validierten Zielsignal wenigstens eine Objektinformation ermittelt werden.

Das wenigstens eine Mittel der Steuer- und/oder Auswerteeinrichtung kann auf softwaremäßigem und/oder hardwaremäßigem Wege realisiert sein.

Außerdem wird die technische Aufgabe bei dem Fahrerassistenzsystem gemäß Anspruch 19 gelöst.

Erfindungsgemäß kann das wenigstens eine zweite Sendesignal mittels einer Phasenmodulation gegenüber dem wenigstens einen ersten Sendesignal so codiert werden, dass eine zumindest temporäre signaltechnische Orthogonalität zwischen den Sendesignalen erzielt wird.

Vorteilhafterweise kann aus dem Ergebnis der wenigstens einen zweidimensionalen diskreten Fourier-Transformation eine Mehrzahl von Zielsignalen, deren Anzahl pro physikalisch vorhandenem Ziel höchstens der Gesamtzahl der ersten und zweiten Sendesignale entspricht, und deren Gesamtmuster eindeutig ermittelt werden. Vorteilhafterweise können die Zielsignale entsprechend dem Gesamtmuster den Sendesignalen jeweils zugeordnet werden. So kann wenigstens eines der Zielsignale validiert werden.

Vorteilhafterweise kann aus wenigstens einem validierten Zielsignal wenigstens eine Objektinformation ermittelt werden.

Im Übrigen gelten die im Zusammenhang mit dem erfindungsgemäßen Verfahren, dem erfindungsgemäßen Radarsystem und dem erfindungsgemäßen Fahrassistenzsystem und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: ein Kraftfahrzeug mit einem Fahrerassistenzsystem und einem Radarsystem zu Überwachung eines Überwachungsbereichs in Fahrtrichtung vor dem Kraftfahrzeug;
- Figur 2: eine Funktionsdarstellung des Kraftfahrzeugs mit dem Fahrerassistenzsystem und dem Radarsystem aus der Figur 1;
- Figur 3: ein Amplituden-Zeit-Diagramm eines Chirps eines ersten Sendesignals eines ersten Senders des Radarsystems aus den Figuren 1 und 2;
- Figur 4: ein Amplituden-Zeit-Diagramm des ersten Sendesignals des ersten Senders des Radarsystems in Form einer Chirp-Sequenz aus den Figuren 1 und 2;
- Figur 5: ein Frequenz-Zeit-Diagramm des ersten Sendesignals aus der Figur 4;
- Figur 6: ein Frequenz-Zeit-Diagramm eines zweiten Sendesignals eines zweiten Senders des Radarsystems aus den Figuren 1 und 2;
- Figur 7: ein Frequenz-Zeit-Diagramm eines dritten Sendesignals eines dritten Senders des Radarsystems aus den Figuren 1 und 2;
- Figur 8: ein Range bin-Doppler bin-Diagramm von Zielsignalen, welche aus Empfangssignalen des ersten Sendesignals, des zweiten Sendesignals und des dritten Sendesignals aus den Figuren 4 und 7 gewonnen werden, für den Fall, dass das Ziel keine Relativgeschwindigkeit gegenüber dem Radarsystem besitzt.

In den Figuren sind gleiche Bauteile mit gleichen Bezugszeichen versehen.

### Ausführungsform(en) der Erfindung

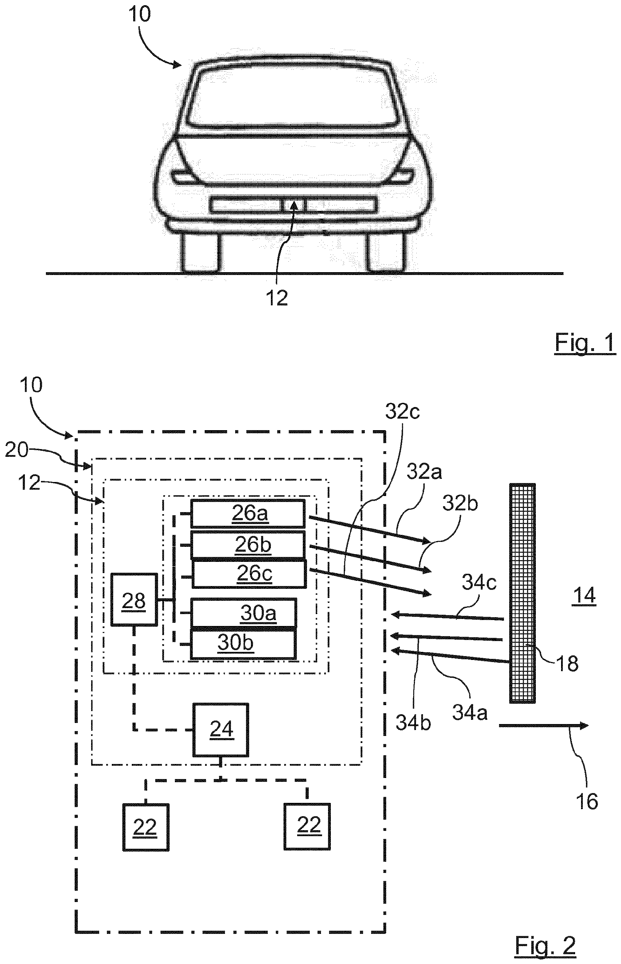

In der Figur 1 ist ein Kraftfahrzeug 10 in Form eines Personenkraftwagens in der Vorderansicht gezeigt. Das Kraftfahrzeug 10 verfügt über ein Radarsystem 12. Das Radarsystem 12 ist beispielhaft in der vorderen Stoßstange des Kraftfahrzeugs 10 angeordnet. Mit dem Radarsystem 12 kann ein in der Figur 2 angedeuteter Überwachungsbereich 14 in Fahrtrichtung 16 vor dem Kraftfahrzeug 10 auf Objekte 18 hin überwacht werden. Das Radarsystem 12 kann auch an anderer Stelle am Kraftfahrzeug 10 angeordnet und anders ausgerichtet sein. Bei den Objekten 18 kann es sich beispielsweise um andere Fahrzeuge, Personen, Hindernisse, Fahrbahnunebenheiten, beispielsweise Schlaglöcher oder Steine, Fahrbahnbegrenzungen oder dergleichen handeln. In der Figur 2 ist ein Objekt 18 beispielhaft als kariertes Rechteck angedeutet. Die Figur 2 ist ansonsten lediglich ein Funktionsschaubild einiger Bauteile des Kraftfahrzeugs 10 und des Radarsystems 12, das nicht der räumlichen Orientierung dient.

Das Radarsystem 12 ist als frequenzmoduliertes Dauerstrichradar ausgestaltet. Frequenzmodulierte Dauerstrichradare werden in Fachkreisen auch als FMCW (Frequency modulated continuous wave) Radare bezeichnet. Mit dem Radarsystem 12 kann beispielsweise eine Entfernung, eine Richtung und eine Geschwindigkeit des Objektes 18 relativ zum Kraftfahrzeug 10 ermittelt werden.

Das Radarsystem 12 ist Teil eines Fahrerassistenzsystems 20 oder kann zumindest mit diesem verbunden sein. Mit dem Fahrerassistenzsystem 20 kann beispielsweise ein Fahrer des Kraftfahrzeugs 10 unterstützt werden. Beispielsweise kann das Kraftfahrzeug 10 mithilfe des Fahrerassistenzsystems 20 wenigstens teilweise autonom fahren. Mit dem Fahrerassistenzsystem 20 können Fahrfunktionen des Kraftfahrzeugs 10, beispielsweise eine Motorsteuerung, eine Bremsfunktion oder eine Lenkfunktion beeinflusst oder Hinweise oder Warnsignale ausgegeben werden. Hierzu ist das Fahrerassistenzsystem 20 mit Funktionseinrichtungen 22 regelnd und/oder steuernd verbunden. In der Figur 2 sind beispielhaft zwei Funktionseinrichtungen 22 dargestellt. Bei den Funktionseinrichtungen 22 kann es sich beispielsweise um ein Motorsteuerungssystem, ein Bremssystem, ein Lenksystem, eine Fahrwerksteuerung oder ein Signalausgabesystem handeln.

Das Fahrerassistenzsystem 20 weist eine elektronische Steuereinrichtung 24 auf, mit der entsprechende elektronische Steuer- und Regelsignale an die Funktionseinrichtungen 22 übermittelt und/oder von diesen empfangen und verarbeitet werden können.

Das Radarsystem 12 umfasst beispielhaft einen ersten Sender 26a, einen zweiten Sender 26b, einen dritten Sender 26c, eine elektronische Steuer- und Auswerteeinrichtung 28, einen ersten Empfänger 30a und einen zweiten Empfänger 30b. Die Sender 26a, 26b und 26c sind beispielhaft mit einem Radarsensor realisiert, der beispielsweise einen Chip mit den drei integrierten Sendern 26a, 26b und 26c enthält. Die Sender 26a, 26b und 26c sind jeweils mit einer separaten Sendeantenne verbunden. Beispielhaft sind die - hier drei - Sendeantennen im Abstand von wenigen Millimetern angeordnet.

Die Steuer- und Auswerteeinrichtung 28 ist signaltechnisch mit der Steuereinrichtung 24 verbunden. Mit der Steuereinrichtung 24 können abhängig von Objektinformationen des Radarsystems 12 Fahrfunktionen des Kraftfahrzeugs 10 gesteuert/geregelt werden. Für die Erfindung ist es nicht wesentlich, ob elektrische Steuer- und/oder Auswertevorrichtungen, wie beispielsweise die Steuereinrichtung 24, die Steuer- und Auswerteeinrichtung 28, ein Motorsteuergerät des Kraftfahrzeugs 10 oder dergleichen, in einem oder mehreren Bauteilen oder Bauteilgruppen integriert oder wenigstens teilweise als dezentrale Bauteile oder Bauteilgruppen realisiert sind.

Die jeweiligen Senderantennen der Sender 26a, 26b und 26c sind beispielhaft identisch aufgebaut Sendeantennen. Sie weisen identische Antennengewinne und Richtcharakteristiken auf. Mit den Sendern 26a, 26b und 26c können jeweilige Sendesignale 32a, 32b und 32c jeweils mit sich ständig ändernder Frequenz in den Überwachungsbereich 14 gesendet werden. Die Sendesignale 32a, 32b und 32c werden an dem Objekt 18 reflektiert und als entsprechende Empfangssignale 34a, 34b und 34c zu den Empfängern 30a und 30b zurückgesendet und mit diesen in eine mit der Steuer-/Auswerteeinrichtung 28 verwertbare Form gebracht. Aus den Empfangssignalen 34a, 34b und 34c wird nach einem weiter unten beschriebenen Verfahren mit der Steuer- und Auswerteeinrichtung 28 die Entfernung, die Richtung und die Geschwindigkeit des Objektes 18 relativ zum Kraftfahrzeug 10 ermittelt.

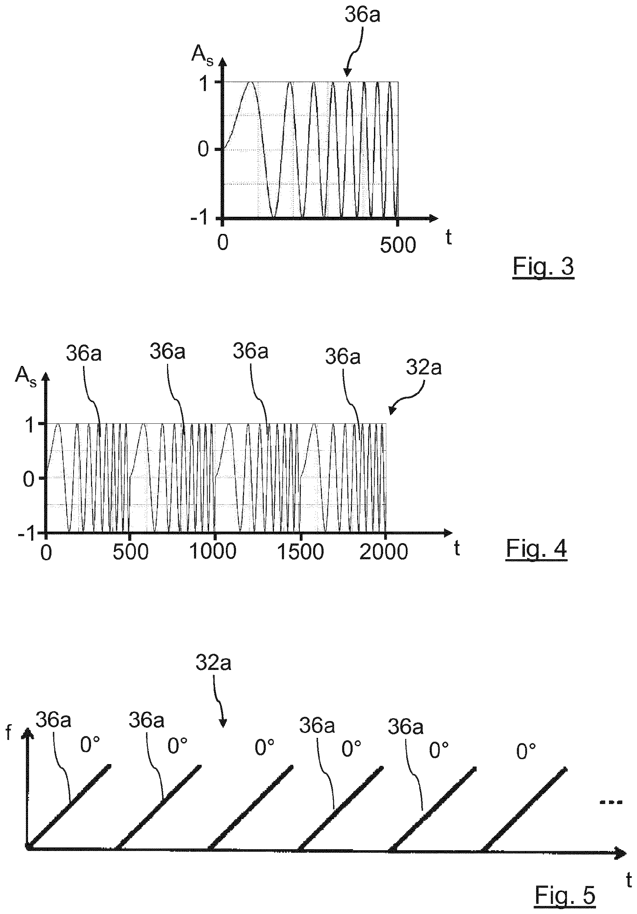

Das Verfahren zur Ermittlung von Objektinformationen von Objekten 18, die mit dem Radarsystem 12 erfasst werden, wird im Folgenden anhand der Figuren 3 bis 8 beispielhaft erläutert.

Bei dem Verfahren werden mit der Steuer- und Auswerteeinrichtung 28 die Sender 26a, 26b und 26c so angesteuert, dass mit dem ersten Sender 26a das erste Sendesignal 32a, dem zweiten Sender 26b das zweite Sendesignal 32b und dem dritten Sender 26c das dritte Sendesignal 32c gleichzeitig in den Überwachungsbereich 14 gesendet werden. Die Sendesignale 32a, 32b und 32c werden aus beispielhaft demselben frequenzmodulierten Dauerstrichsignal erzeugt und bestehen aus mehreren nacheinander folgenden Chirps 36a, 36b, 36c und 36d. Hierbei werden das zweite Sendesignal 32b und das dritte Sendesignal 32c mittels einer Phasenmodulation beispielhaft in Form einer Quadratur-Phasenumtastung (QPSK) gegenüber dem ersten Sendesignal 32a so codiert, dass eine signaltechnische Orthogonalität zwischen dem ersten Sendesignal 32a, dem zweiten Sendesignal 32b und dem dritten Sendesignal 32c erzielt wird. Bei der Quadratur-Phasenumtastung werden Verschiebungen der Phasenlagen von 0°, 90°, 180° und 270° vorgenommen.

In der Figur 3 ist beispielhaft ein einzelner Chirp 36a des ersten Sendesignals 32a in einem Amplituden-Zeit-Diagramm gezeigt. Die Amplitude Aₛ ist dabei auf der Ordinatenachse und die Zeit t auf der Abszissenachse aufgetragen. Die Amplitude Aₛ des ersten Sendesignals 32a ist beispielhaft auf 1 normiert. Das Amplituden-Zeit-Diagramm aus der Figur 4 zeigt das erste Sendesignal 32a mit mehreren aufeinanderfolgenden Chirps 36a. Insgesamt werden beispielhaft bei einer Messung 128 solcher Chirps 36a ausgesendet. Die Anzahl der Chirps 36a gibt einen Eindeutigkeitsbereich an, der hier beispielhaft 128 beträgt. Die aufeinander folgenden Chirps 36a des ersten Sendesignals 32a haben jeweils die gleiche Phasenlage, sind also jeweils um 0° bezüglich ihrer Phase verschoben. Insgesamt wird also das erste Sendesignal 32a kontinuierlich mit konstanter oder identischer Phase beziehungsweise Phasenlage ausgesendet. In der Figur 5 ist ein Frequenz-Zeit-Diagramm für das erste Sendesignal 32a aus der Figur 4 gezeigt. Die Frequenz f ist auf der Ordinatenachse und die Zeit t auf der Abszissenachse aufgetragen. Die aufeinander folgenden Chirp 36a sind hier jeweils als Frequenzrampen gezeigt, die jeweils um 0° bezüglich ihrer Phase verschoben sind.

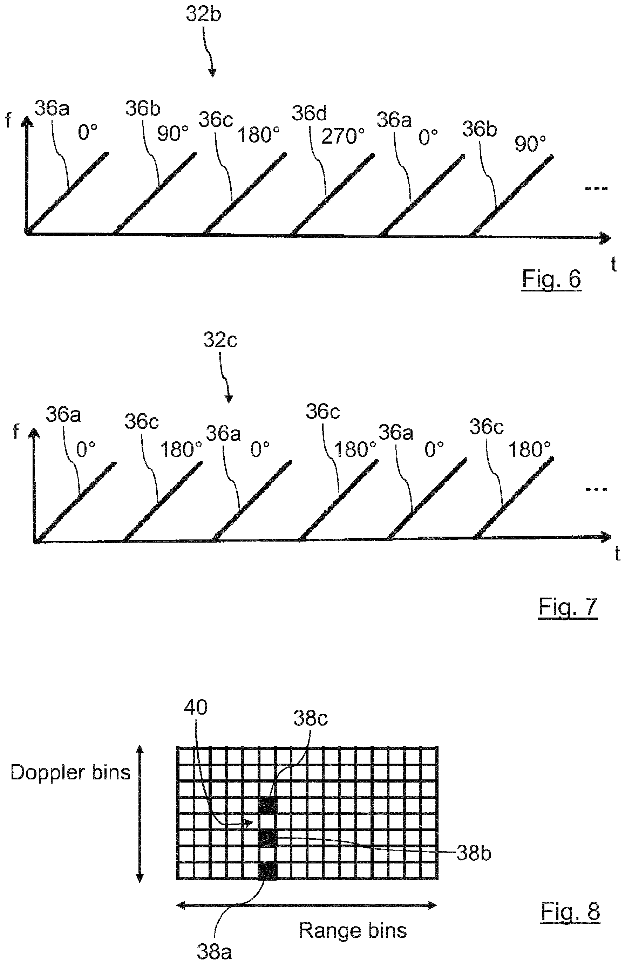

In der Figur 6 ist ein mit der Figur 5 vergleichbares Frequenz-Zeit-Diagramm des zweiten Sendesignals 32b gezeigt. Das zweite Sendesignal 32b wird mit wechselnder Phase ausgesendet. Das zweite Sendesignal 32b wird analog zum ersten Sendesignal 32a auf Basis von vier nacheinander folgenden Chirps 36a, 36b, 36c und 36d ausgesendet. Dabei wird in der Chirp-Sequenz von einem Chirp zum nächsten eine Inkrementierung der Phasenlage um 90° ausgeführt Die Chirps 36a haben eine Phasenlage von 0°, die Chirps 36b haben eine Phasenlage von 90°, die Chirps 36c haben eine Phasenlage von 180° und die Chirps 36d haben eine Phasenlage von 270°. Nach dem Chirp 36d wiederholt sich die Chirp-Sequenz beginnend mit einem Chirp 36a.

In der Figur 7 ist ein mit den Figuren 5 und 6 vergleichbares Frequenz-Zeit-Diagramm des dritten Sendesignals 32c gezeigt. Auch das dritte Sendesignal 32c wird mit wechselnder Phase ausgesendet. Das dritte Sendesignal 32c wird analog zum zweiten Sendesignal 32b auf Basis von vier nacheinander folgenden Chirps 36a, 36b, 36a und 36b ausgesendet. Die Chirp 36a haben eine Phasenlage von 0° und die Chirps 36c haben eine Phasenlage von 180°. Es wird ein Inkrement von 180° verwendet. Das bedeutet, dass eine alternierende Phasenlage von 0° und 180° erzeugt wird.

Mit den Empfängern 30a und 30b werden die an dem Objekt 18 reflektierten Echos der Sendesignale 32a, 32b und 32c als Empfangssignale 34a, 34b und 34c empfangen und in eine mit der Steuer-/Auswerteeinrichtung 28 verwertbare Form gebracht.

Die Empfangssignale 34a, 34b und 34c werden mit entsprechenden Mitteln der Steuer-/Auswerteeinrichtung 28 einer einzigen zweidimensionalen schnellen Fourier-Transformation unterzogen.

Aus dem Ergebnis der zweidimensionalen diskreten Fourier-Transformation werden drei den Sendesignalen 32a, 32b und 32c entsprechende Zielsignale 38a, 38b und 38c ermittelt. Die Anzahl der Zielsignale 38a, 38b und 38c für das eine Objekt 18 entspricht der Gesamtzahl der Sender 26a, 26b und 26c, hier also drei.

In der Figur 8 sind beispielhaft die Zielsignale 38a, 38b und 38c in einem Range bin-Doppler bin-Diagramm jeweils mit einem schwarzen Quadrat angedeutet. Dabei führt das Ziel beispielhaft keine Relativbewegung bezüglich dem Radarsystem 12 aus. Die Range bins entsprechen dabei so genannten Entfernungstoren, Abstandsintervallen oder Rangezellen. Die Doppler bins entsprechen sogenannten Relativgeschwindigkeitstoren, Dopplertoren oder Dopplerzellen. Im vorliegenden Ausführungsbeispiel entspricht der Eindeutigkeitsbereich der Anzahl der Chirps 36a, 36b und 36c und beträgt, wie bereits oben erwähnt, 128 Doppler bins, von denen in der Figur 8 lediglich einige in Form eines Rasters angedeutet sind. Die den Zielsignalen 38a, 38b und 28c entsprechenden Ziele, welche von demselben Objekt 18 herrühren, befinden sich im selben Range bin, also in derselben Entfernung zu dem Radarsystem 12. Eines der Zielsignale, welches im Folgenden als erstes Zielsignal 38a bezeichnet wird, befindet sich beispielhaft in dem in der Figur 8 untersten Doppler bin. Das zweite Zielsignal 38b befindet sich beispielhaft in dem dritten Doppler bin von unten. Das dritte Zielsignal 38c befindet sich beispielhaft in dem fünften Doppler bin von unten. Die Verschiebung der Zielsignale 38a, 38b und 38c in der Doppler-Dimension lässt sich berechnen als: phase_step_size/360 * unambiguous Doppler. Für das erste Zielsignal 38a ist der Dopplerwert =0. Für das zweite Zielsignal 38b ist der Dopplerwert = 0,25 * unambiguous Doppler. Für das dritte Zielsignal 38c ist der Dopplerwert = 0,5 * unambiguous Doppler. Die drei Zielsignale 38a, 38b und 38c bilden ein eindeutiges Gesamtmuster 40. Das Gesamtmuster 40 kann beispielsweise mithilfe eines Korrelators detektiert werden.

Aus dem Gesamtmuster 40 wird das erste Zielsignal 38a dem ersten Sendesignal 32a, das zweite Zielsignal 38b dem zweiten Sendesignal 32b und das dritte Zielsignal 38c dem dritten Sendesignals 32c eindeutig zugeordnet. Auf diese Weise werden das erste Zielsignal 38a, das zweite Zielsignal 38b und das dritte Zielsignal 38c jeweils validiert.

Da sich die Zielsignale 38a, 38b und 38c im selben range bin befinden, kann aus ihnen jeweils die korrekte Entfernung abgeleitet werden.

Da das erste Sendesignal 32a nicht codiert und in seiner Phase verschoben ist, kann das dem ersten Zielsignal 38a zugehörige Doppler bin als das korrekte Doppler bin betrachtet werden und daraus die korrekte Relativgeschwindigkeit des Objektes 18 abgeleitet werden.

Das zweite Zielsignal 38b ist in der Geschwindigkeit um 90°/360°, also um ein Viertel des Eindeutigkeitsbereichs, verschoben abgebildet. Nach einer geeigneten Korrektur kann auch aus dem zweiten Zielsignal 38b die korrekte Relativgeschwindigkeit abgeleitet werden. Ebenso ist das dritte Zielsignal 38c in der Geschwindigkeit um 180°/360°, also um die Hälfte des Eindeutigkeitsbereichs, verschoben abgebildet. Nach einer geeigneten Korrektur kann auch aus dem dritten Zielsignal 38c die korrekte Relativgeschwindigkeit abgeleitet werden.

Die Phasenwerte, welche zu den Zielsignalen 38a, 38b und 38c gehören, und die Phasenwerte, welche zu den Sendesignalen 32a, 32b und 32c gehören, können aufgrund der Verschiebung unabhängig voneinander bestimmt werden und für eine phasenbasierte Winkelmessung des Azimut und der Elevation des Objektes 18 bezüglich des Radarsystems 12 genutzt werden.

Aus den validierten Zielsignalen 38a, 38b und 38c wird so die Relativgeschwindigkeit, der Abstand und eine Richtung und damit die Position des Objektes 18 bezüglich dem Radarsystem 12 als Objektinformationen ermittelt.

Das Verfahren wird zyklisch durchgeführt, sodass der Überwachungsbereich 14 kontinuierlich auf Objekte 18 hin überwacht und entsprechende erfasste Objekte 18 verfolgt werden können.

Die Erfindung kann auch bei Radarsystem 12 mit mehr als drei Sendern 26a, 26b und 26c und/oder mehr oder weniger als zwei Empfängern 30a und 30b und entsprechenden Sendesignalen 32a, 32b und 32c beziehungsweise Empfangssignalen 34a, 34b und 34c eingesetzt werden.

## Patentansprüche

1. Verfahren zur Ermittlung von wenigstens einer Objektinformation wenigstens eines Objektes (18), das mit einem Radarsystem (12) insbesondere eines Fahrzeugs (10) erfasst wird, bei dem mit wenigstens zwei Sendern (26a, 26b, 26c) des Radarsystems (12) Sendesignale (32a, 32b, 32c) in einen Überwachungsbereich (14) des Radarsystems (12) gesendet werden, wobei
- mit wenigstens einem Empfänger (30a, 30b) an dem wenigstens einen Objekt (18) reflektierte Echos der Sendesignale (32a, 32b, 32c) als Empfangssignale (34a, 34b, 34c) empfangen werden, und, sofern erforderlich, in eine für eine elektronische Steuer- und/oder Auswerteeinrichtung (28) verwertbare Form gebracht werden,
- die Empfangssignale (34a, 34b, 34c) wenigstens einer zweidimensionalen diskreten Fourier-Transformation unterzogen werden,
- aus dem Ergebnis der wenigstens einen zweidimensionalen diskreten Fourier-Transformation wenigstens ein Zielsignal (38a, 38b, 38c) ermittelt wird,
- aus dem wenigstens einen Zielsignal (38a, 38b, 38c) wenigstens eine Objektin-formation ermittelt wird,
- auf der Senderseite aus einem frequenzmodulierten Dauerstrichsignal wenigstens ein erstes Sendesignal (32a) und wenigstens ein zweites Sendesignal (32b, 32c) erzeugt werden, wobei das wenigstens eine zweite Sendesignal (32b, 32c) mittels einer Phasenmodulation gegenüber dem wenigstens einen ersten Sendesignal (32a) codiert wird, wobei die Phasenlage des wenigstens einen zweiten Sendesignals (32b, 32c) von einer Frequenzrampe zur nächsten jeweils um einen konstanten Betrag inkrementiert oder dekrementiert wird,
- das wenigstens eine erste Sendesignal (32a) mit wenigstens einem ersten Sender (26a) und das wenigstens eine zweite Sendesignal (32b, 32c) mit wenigstens einem zweiten Sender (26b, 26c) gleichzeitig in den Überwachungsbereich (14) des Radarsystems (12) gesendet werden, wobei
- das wenigstens eine zweite Sendesignal (32b, 32c) auf der Senderseite mittels einer höherstufigen Phasenumtastung codiert wird.

2. Verfahren nach Anspruch 1, **dadurch gekennzeichnet, dass** auf der Empfängerseite aus dem Ergebnis der wenigstens einen zweidimensionalen diskreten Fourier-Transformation eine Mehrzahl von Zielsignalen (38a, 38b, 38c), deren Anzahl pro physikalisch vorhandenem Ziel höchstens der Gesamtzahl der ersten und zweiten Sendesignale (32a, 32b, 32c) entspricht, und deren Gesamtmuster (40) des zweidimensionalen Leistungsspektrums in der Doppler-Dimension eindeutig ermittelt wird.

3. Verfahren nach Anspruch 2, **dadurch gekennzeichnet, dass** die Zielsignale (38a, 38b, 38c) entsprechend dem Gesamtmuster (40) den Sendesignalen (32a, 32b, 32c) jeweils zugeordnet werden und so wenigstens eines der Zielsignale (38a, 38b, 38c) validiert wird.

4. Verfahren nach Anspruch 3, **dadurch gekennzeichnet, dass** aus wenigstens einem validierten Zielsignal (38a, 38b, 38c) wenigstens eine Objektinformation ermittelt wird.

5. Verfahren nach einem der vorigen Ansprüche 3 oder 4, **dadurch gekennzeichnet, dass** aus wenigstens einem ersten validierten Zielsignal (38a), welches wenigstens einem ersten Sendesignal (32a) zugeordnet ist, und aus wenigstens einem zweiten validierten Zielsignal (38b, 38b), welches wenigstens einem zweiten Sendesignal (32b, 32b) zugeordnet ist, wenigstens eine Objektinformation ermittelt wird.

6. Verfahren nach einem der vorigen Ansprüche 3 bis 5, **dadurch gekennzeichnet, dass** aus wenigstens einem validierten Zielsignal (38a, 38b, 38c) wenigstens eine Objektinformation in Form einer Geschwindigkeit und/oder einer Position, insbesondere ein Abstand und/oder eine Richtung, des wenigstens einen Objektes (18) relativ zu dem Radarsystem (12) ermittelt wird.

7. Verfahren nach einem der vorigen Ansprüche, **dadurch gekennzeichnet, dass** eine einzige zweidimensionale diskrete Fourier-Transformation, insbesondere eine einzige zweidimensionale schnelle Fourier-Transformation, ausgeführt wird.

8. Verfahren nach einem der vorigen Ansprüche, **dadurch gekennzeichnet, dass das** wenigstens eine zweite Sendesignal (32b, 32c) mittels einer Phasenmodulation gegenüber dem wenigstens einen ersten Sendesignal (32a) so codiert wird, dass eine signaltechnische Orthogonalität zwischen den Sendesignalen erzielt wird.

9. Verfahren nach einem der vorigen Ansprüche, **dadurch gekennzeichnet, dass** die Codierung des wenigstens einen zweiten Sendesignals im Takt der Frequenzrampen des wenigstens einen ersten Sendesignals erfolgen.

10. Verfahren nach einem der vorherigen Ansprüche, **dadurch gekennzeichnet, dass** die höherstufige Phasenumtastung eine Vierphasenmodulation, eine Achtphasenmodulation, eine 16-Phasemodulation oder eine noch höherphasige Modulation ist.

11. Verfahren nach einem der vorigen Ansprüche, **dadurch gekennzeichnet, dass** eine entstehende Verschiebung der Phasenlagen einem ganzzahligen Vielfachen einer Doppler-Zelle entspricht.

12. Verfahren nach einem der vorigen Ansprüche, **dadurch gekennzeichnet, dass** bei jedem Sender eine andere Schrittgröße des Phaseninkrements oder Phasendekrements verwendet wird.

13. Verfahren nach einem der vorigen Ansprüche, **dadurch gekennzeichnet, dass** das ein erstes Sendesignal (32a), ein zweites Sendesignal (32b) und ein drittes Sendesignal erzeugt werden, wobei das zweite Sendesignal (32b) und das dritte Sendesignal (32c) mittels einer Phasenmodulation gegenüber dem ersten Sendesignal (32a) so codiert werden, dass eine signaltechnische Orthogonalität zwischen dem ersten Sendesignal (32a), dem zweiten Sendesignal (32b) und dem dritten Sendesignal (32c) erzielt wird.

14. Verfahren nach Anspruch 13, **dadurch gekennzeichnet, dass** das zweite Sendesignal (32b) auf der Senderseite mittels einer Quadratur-Phasenumtastung codiert wird.

15. Verfahren nach einem der vorigen Ansprüche, **dadurch gekennzeichnet, dass** bei der Phasenmodulation von mehreren zweiten Sendesignalen (32b, 32c) unterschiedliche Phaseninkremente oder Phasendekremente für die jeweiligen zweiten Sendesignale (32b, 32c) verwendet werden.

16. Verfahren nach einem der vorigen Ansprüche, **dadurch gekennzeichnet, dass** wenigstens ein erstes Sendesignal (32a) mit konstanter Phase und wenigstens ein zweites Sendesignal (32b, 32c) mit wechselnder Phase ausgesendet werden

17. Verfahren nach einem der vorigen Ansprüche, **dadurch gekennzeichnet, dass** das Verfahren mehrmals hintereinander, insbesondere zyklisch, durchgeführt wird.

18. Radarsystem (12) insbesondere eines Fahrzeugs (10) zur Ermittlung von wenigstens einer Objektinformation wenigstens eines Objektes (18), mit wenigstens zwei Sendern (26a, 26b, 26 c) zum Senden von Sendesignalen (32a, 32b, 32 c) in einen Überwachungsbereich (14), wenigstens einem Empfänger (30a, 30b) zum Empfangen von an dem wenigstens einen Objekt (18) reflektierten Echos der Sendesignale (32a, 32b, 32 c) als Empfangssignale (34a, 34b, 34 c) und wenigstens einer Steuer- und/oder Auswerteeinrichtung (28) zur Steuerung des wenigstens einen Senders (26a, 26b, 26 c) und des wenigstens einen Empfängers (30a, 30b), wobei die wenigstens eine Steuer- und/oder Auswerteeinrichtung (28) Mittel aufweist zur Ermittlung wenigstens eines Zielsignals (38a, 38b, 38 b) aus wenigstens einer zweidimensionalen diskreten Fourier-Transformation der Empfangssignale (34a, 34b, 34 b) und zur Ermittlung wenigstens einer Objektinformation aus wenigstens einem Zielsignal (38a, 38b, 38 b), insbesondere zur Durchführung des Verfahrens gemäß einem der vorigen Ansprüche, wobei die Mittel der wenigstens einen Steuer- und/oder Auswerteeinrichtung (28) geeignet sind, um das Radarsystem (12) so zu steuern, dass
- aus einem frequenzmodulierten Dauerstrichsignal wenigstens ein erstes Sendesignal (32a) und wenigstens ein zweites Sendesignal (32b, 32c) erzeugt werden können, wobei das wenigstens eine zweite Sendesignal (32b, 32c) mittels einer Phasenmodulation gegenüber dem wenigstens einen ersten Sendesignal (32a) codiert werden kann, wobei die Phasenlage des wenigstens einen zweiten Sendesignals (32b, 32c) von einer Frequenzrampe zur nächsten jeweils um einen konstanten Betrag inkrementiert oder dekrementiert werden kann ,
das wenigstens eine erste Sendesignal (32a) mit dem wenigstens einen ersten Sender (26) und das wenigstens eine zweite Sendesignal (32b, 32c) mit dem wenigstens einen zweiten Sender (26b, 26c) gleichzeitig in den Überwachungsbereich (14) des Radarsystems (12) gesendet werden kann,
wobei das wenigstens eine zweite Sendesignal (32b, 32c) auf der Senderseite mittels einer höherstufigen Phasenumtastung codiert werden kann.

19. Fahrerassistenzsystem (20) eines Fahrzeugs (10), mit wenigstens einer elektronischen Steuereinrichtung (24) zur Steuerung von Funktionseinrichtungen (22) des Fahrzeugs (10) abhängig von Informationen, welche durch wenigstens ein Radarsystem (12) bereitgestellt werden, und mit wenigstens einem Radarsystem (12) zur Ermittlung von wenigstens einer Objektinformation wenigstens eines Objektes (18), mit wenigstens zwei Sendern (26a, 26b, 26c) zum Senden von Sendesignalen (32a, 32b, 32c) in einen Überwachungsbereich (14), wenigstens einem Empfänger (30a, 30b) zum Empfangen von an dem wenigstens einen Objekt (18) reflektierten Echos der Sendesignale (32a, 32b, 32c) als Empfangssignale (34a, 34b, 34c) und wenigstens einer Steuer- und/oder Auswerteeinrichtung (28) zur Steuerung des wenigstens einen Senders (26a, 26b, 26c) und des wenigstens einen Empfängers (30a, 30b), wobei die wenigstens eine Steuer- und/oder Auswerteeinrichtung (28) Mittel aufweist zur Ermittlung wenigstens eines Zielsignals (38a, 38b, 38c) aus wenigstens einer zweidimensionalen diskreten Fourier-Transformation der Empfangssignale (34a, 34b, 34c) und zur Ermittlung wenigstens einer Objektinformation aus wenigstens einem Zielsignal (38a, 38b, 38c), insbesondere zur Durchführung des Verfahrens gemäß den Ansprüchen 1 bis 12, wobei die Mittel der wenigstens einen Steuer- und/oder Auswerteeinrichtung (28) geeignet sind, um das Radarsystem (12) so zu steuern, dass
- aus einem frequenzmodulierten Dauerstrichsignal wenigstens ein erstes Sendesignal (32a) und wenigstens ein zweites Sendesignal (32b, 32c) erzeugt werden können, wobei das wenigstens eine zweite Sendesignal (32b, 32c) mittels einer Phasenmodulation gegenüber dem wenigstens einen ersten Sendesignal (32a) codiert werden kann, wobei die Phasenlage des wenigstens einen zweiten Sendesignals (32b, 32c) von einer Frequenzrampe zur nächsten jeweils um einen konstanten Betrag inkrementiert oder dekrementiert werden kann ,
- das wenigstens eine erste Sendesignal (32a) mit dem wenigstens einen ersten Sender (26a) und das wenigstens eine zweite Sendesignal (32b, 32c) mit dem wenigstens einen zweiten Sender (26b, 26c) gleichzeitig in den Überwachungsbereich (14) des Radarsystems (12) gesendet werden kann, wobei das wenigstens eine zweite Sendesignal (32b, 32c) auf der Senderseite mittels einer höherstufigen Phasenumtastung codiert werden kann.

## Claims

1. Method for determining at least one piece of object information for at least one object (18) sensed by a radar system (12), in particular of a vehicle (10), in which at least two transmitters (26a, 26b, 26c) of the radar system (12) are used to transmit transmission signals (32a, 32b, 32c) to a monitoring region (14) of the radar system (12), wherein
- at least one receiver (30a, 30b) is used to receive echoes, which are reflected from the at least one object (18), of the transmission signals (32a, 32b, 32c) as received signals (34a, 34b, 34c), and, if necessary, to convert them into a form that can be used by an electronic control and/or evaluation device (28),
- the received signals (34a, 34b, 34c) are subjected to at least one two-dimensional discrete Fourier transformation,
- at least one target signal (38a, 38b, 38c) is determined from the result of the at least one two-dimensional discrete Fourier transformation,
- at least one piece of object information is determined from the at least one target signal (38a, 38b, 38c),
- at least one first transmission signal (32a) and at least one second transmission signal (32b, 32c) are generated from a frequency-modulated continuous wave signal at the transmitter end, the at least one second transmission signal (32b, 32c) being encoded by means of a phase modulation with respect to the at least one first transmission signal (32a), the phase angle of the at least one second transmission signal (32b, 32c) being incremented or decremented by a respective constant amount from one frequency ramp to the next,
- the at least one first transmission signal (32a) is transmitted by at least one first transmitter (26a) and the at least one second transmission signal (32b, 32c) is transmitted by at least one second transmitter (26b, 26c) to the monitoring region (14) of the radar system (12) simultaneously, wherein
- the at least one second transmission signal (32b, 32c) is encoded at the transmitter end by means of higher-order phase shift keying.

2. Method according to Claim 1, **characterized in that** a plurality of target signals (38a, 38b, 38c), the number of which per physically present target corresponds to no more than the total number of the first and second transmission signals (32a, 32b, 32c), and the overall pattern (40) of said target signals for the two-dimensional power spectrum in the Doppler dimension are uniquely determined at the receiver end from the result of the at least one two-dimensional discrete Fourier transformation.

3. Method according to Claim 2, **characterized in that** the target signals (38a, 38b, 38c) are each associated with the transmission signals (32a, 32b, 32c) in accordance with the overall pattern (40) and in this way at least one of the target signals (38a, 38b, 38c) is validated.

4. Method according to Claim 3, **characterized in that** at least one piece of object information is determined from at least one validated target signal (38a, 38b, 38c) .

5. Method according to either of the above Claims 3 and 4, **characterized in that** at least one piece of object information is determined from at least one first validated target signal (38a), which is associated with at least one first transmission signal (32a), and from at least one second validated target signal (38b, 38b), which is associated with at least one second transmission signal (32b, 32b).

6. Method according to one of the preceding Claims 3 to 5, **characterized in that** at least one piece of object information in the form of a speed and/or a position, in particular a distance and/or a direction, of the at least one object (18) relative to the radar system (12) is determined from at least one validated target signal (38a, 38b, 38c).

7. Method according to one of the preceding claims, **characterized in that** a single two-dimensional discrete Fourier transformation, in particular a single two-dimensional fast Fourier transformation, is performed.

8. Method according to one of the preceding claims, **characterized in that** the at least one second transmission signal (32b, 32c) is encoded by means of a phase modulation with respect to the at least one first transmission signal (32a) in such a way that signal orthogonality is achieved between the transmission signals.

9. Method according to one of the preceding claims, **characterized in that** the encoding of the at least one second transmission signal takes place in time with the frequency ramps of the at least one first transmission signal.

10. Method according to one of the preceding claims, **characterized in that** the higher-order phase shift keying is a four-phase modulation, an eight-phase modulation, a 16-phase modulation or an even higher-phase modulation.

11. Method according to one of the preceding claims, **characterized in that** an arising shift in the phase angles corresponds to an integer multiple of a Doppler cell.

12. Method according to one of the preceding claims, **characterized in that** a different step size for the phase increment or phase decrement is used for each transmitter.

13. Method according to one of the preceding claims, **characterized in that** a first transmission signal (32a), a second transmission signal (32b) and a third transmission signal are generated, the second transmission signal (32b) and the third transmission signal (32c) being encoded by means of a phase modulation with respect to the first transmission signal (32a) in such a way that signal orthogonality is achieved between the first transmission signal (32a), the second transmission signal (32b) and the third transmission signal (32c).

14. Method according to Claim 13, **characterized in that** the second transmission signal (32b) is encoded at the transmitter end by means of quadrature phase shift keying.

15. Method according to one of the preceding claims, **characterized in that** different phase increments or phase decrements for the respective second transmission signals (32b, 32c) are used for the phase modulation of multiple second transmission signals (32b, 32c).

16. Method according to one of the preceding claims, **characterized in that** at least one first transmission signal (32a) is transmitted with constant phase and at least one second transmission signal (32b, 32c) is transmitted with changing phase.

17. Method according to one of the preceding claims, **characterized in that** the method is carried out multiple times in succession, in particular cyclically.

18. Radar system (12), in particular of a vehicle (10), for determining at least one piece of object information for at least one object (18), having at least two transmitters (26a, 26b, 26c) for transmitting transmission signals (32a, 32b, 32c) to a monitoring region (14), at least one receiver (30a, 30b) for receiving echoes, which are reflected from the at least one object (18), of the transmission signals (32a, 32b, 32c) as received signals (34a, 34b, 34c) and at least one control and/or evaluation device (28) for controlling the at least one transmitter (26a, 26b, 26c) and the at least one receiver (30a, 30b), wherein the at least one control and/or evaluation device (28) has means for determining at least one target signal (38a, 38b, 38b) from at least one two-dimensional discrete Fourier transformation of the received signals (34a, 34b, 34b) and for determining at least one piece of object information from at least one target signal (38a, 38b, 38b), in particular for carrying out the method according to one of the preceding claims, wherein the means of the at least one control and/or evaluation device (28) are suitable for controlling the radar system (12) in such a way that
- at least one first transmission signal (32a) and at least one second transmission signal (32b, 32c) can be generated from a frequency-modulated continuous wave signal, the at least one second transmission signal (32b, 32c) being able to be encoded by means of a phase modulation with respect to the at least one first transmission signal (32a), the phase angle of the at least one second transmission signal (32b, 32c) being able to be incremented or decremented by a respective constant amount from one frequency ramp to the next,
the at least one first transmission signal (32a) can be transmitted by the at least one first transmitter (26a) and the at least one second transmission signal (32b, 32c) can be transmitted by the at least one second transmitter (26b, 26c) to the monitoring region (14) of the radar system (12) simultaneously,
wherein the at least one second transmission signal (32b, 32c) can be encoded at the transmitter end by means of higher-order phase shift keying.

19. Driver assistance system (20) of a vehicle (10), having at least one electronic control device (24) for controlling functional devices (22) of the vehicle (10) on the basis of information provided by at least one radar system (12), and having at least one radar system (12) for determining at least one piece of object information for at least one object (18), having at least two transmitters (26a, 26b, 26c) for transmitting transmission signals (32a, 32b, 32c) to a monitoring region (14), at least one receiver (30a, 30b) for receiving echoes, which are reflected from the at least one object (18), of the transmission signals (32a, 32b, 32c) as received signals (34a, 34b, 34c) and at least one control and/or evaluation device (28) for controlling the at least one transmitter (26a, 26b, 26c) and the at least one receiver (30a, 30b), wherein the at least one control and/or evaluation device (28) has means for determining at least one target signal (38a, 38b, 38c) from at least one two-dimensional discrete Fourier transformation of the received signals (34a, 34b, 34c) and for determining at least one piece of object information from at least one target signal (38a, 38b, 38c), in particular for carrying out the method according to Claims 1 to 12, wherein the means of the at least one control and/or evaluation device (28) are suitable for controlling the radar system (12) in such a way that
- at least one first transmission signal (32a) and at least one second transmission signal (32b, 32c) can be generated from a frequency-modulated continuous wave signal, the at least one second transmission signal (32b, 32c) being able to be encoded by means of a phase modulation with respect to the at least one first transmission signal (32a), the phase angle of the at least one second transmission signal (32b, 32c) being able to be incremented or decremented by a respective constant amount from one frequency ramp to the next,
- the at least one first transmission signal (32a) can be transmitted by the at least one first transmitter (26a) and the at least one second transmission signal (32b, 32c) can be transmitted by the at least one second transmitter (26b, 26c) to the monitoring region (14) of the radar system (12) simultaneously, wherein
the at least one second transmission signal (32b, 32c) can be encoded at the transmitter end by means of higher-order phase shift keying.

## Revendications

1. Procédé pour déterminer au moins une information d'objet d'au moins un objet (18), qui est détecté avec un système radar (12), notamment d'un véhicule (10), avec lequel des signaux d'émission (32a, 32b, 32c) sont envoyés dans une zone de surveillance (14) du système radar (12) avec au moins deux émetteurs (26a, 26b, 26c) du système radar (12),
- les échos des signaux d'émission (32a, 32b, 32c) réfléchis sur l'au moins un objet (18) étant reçus par au moins un récepteur (30a, 30b) sous la forme de signaux de réception (34a, 34b, 34c) et, si nécessaire, sont amenés dans une forme utilisable pour un dispositif électronique de commande et/ou d'interprétation (28),
- les signaux de réception (34a, 34b, 34c) étant soumis à au moins une transformée de Fourier discrète bidimensionnelle,
- au moins un signal de cible (38a, 38b, 38c) étant déterminé à partir du résultat de l'au moins une transformée de Fourier discrète bidimensionnelle,
- au moins une information d'objet étant déterminée à partir de l'au moins un signal de cible (38a, 38b, 38c),
- au moins un premier signal d'émission (32a) et au moins un deuxième signal d'émission (32b, 32c) étant générés du côté de l'émetteur à partir d'un signal à onde entretenue modulé en fréquence, l'au moins un deuxième signal d'émission (32b, 32c) étant codé au moyen d'une modulation de phase par rapport à l'au moins un premier signal d'émission (32a), la position de phase de l'au moins un deuxième signal d'émission (32b, 32c) étant respectivement incrémentée ou décrémentée d'un montant constant d'une rampe de fréquence vers la suivante,
- l'au moins un premier signal d'émission (32a) étant émis par au moins un premier émetteur (26a) et l'au moins un deuxième signal d'émission (32b, 32c) par au moins un deuxième émetteur (26b, 26c) simultanément dans la zone de surveillance (14) du système radar (12),
- l'au moins un deuxième signal d'émission (32b, 32c) étant codé du côté de l'émetteur au moyen d'une manipulation par déplacement de phase de niveau supérieur.

2. Procédé selon la revendication 1, **caractérisé en ce qu'**une pluralité de signaux de cible (38a, 38b, 38c), dont le nombre par cible physique présente correspond au maximum au nombre total des premiers et deuxièmes signaux d'émission (32a, 32b, 32c), ainsi que leur modèle global (40) du spectre de puissance bidimensionnel dans la dimension Doppler sont déterminés du côté du récepteur à partir du résultat de l'au moins une transformée de Fourier discrète bidimensionnelle.

3. Procédé selon la revendication 2, **caractérisé en ce que** les signaux de cible (38a, 38b, 38c) sont respectivement associés aux signaux d'émission (32a, 32b, 32c) conformément au modèle global (40) et au moins l'un des signaux de cible (38a, 38b, 38c) est ainsi validé.

4. Procédé selon la revendication 3, **caractérisé en ce qu'**au moins une information d'objet est déterminée à partir d'au moins un signal de cible (38a, 38b, 38c) validé.

5. Procédé selon l'une des revendications précédentes 3 ou 4, **caractérisé en ce qu'**au moins une information d'objet est déterminée à partir d'au moins un premier signal de cible (38a) validé, lequel est associé au moins à un premier signal d'émission (32a), et à partir d'au moins un deuxième signal de cible (38b, 38b) validé, lequel est associé au moins à un deuxième signal d'émission (32b, 32b).

6. Procédé selon l'une des revendications précédentes 3 à 5, **caractérisé en ce qu'**au moins une information d'objet, sous la forme d'une vitesse et/ou d'une position, notamment une distance et/ou une direction, de l'au moins un objet (18) par rapport au système radar (12), est déterminée à partir d'au moins un signal de cible (38a, 38b, 38c) validé.

7. Procédé selon l'une des revendications précédentes, **caractérisé en ce qu'**une transformée de Fourier discrète bidimensionnelle unique, notamment une transformée de Fourier bidimensionnelle rapide unique, est exécutée.

8. Procédé selon l'une des revendications précédentes, **caractérisé en ce que** l'au moins un deuxième signal d'émission (32b, 32c) est codé au moyen d'une modulation de phase par rapport à l'au moins un premier signal d'émission (32a) de telle sorte qu'une orthogonalité signalétique entre les signaux d'émission est obtenue.

9. Procédé selon l'une des revendications précédentes, **caractérisé en ce que** le codage de l'au moins un deuxième signal d'émission s'effectue au cycle des rampes de fréquence de l'au moins un premier signal d'émission.

10. Procédé selon l'une des revendications précédentes, **caractérisé en ce que** la manipulation par déplacement de phase de niveau supérieur est une modulation de phase à 4 états, une modulation de phase à 8 états, une modulation de phase à 16 états ou une modulation de phase à niveau encore supérieur.

11. Procédé selon l'une des revendications précédentes, **caractérisé en ce qu'**un déphasage survenant correspond à un multiple entier d'une cellule Doppler.

12. Procédé selon l'une des revendications précédentes, **caractérisé en ce qu'**une grandeur de pas différente de l'incrément de phase ou du décrément de phase est utilisée pour chaque émetteur.

13. Procédé selon l'une des revendications précédentes, **caractérisé en ce qu'**un premier signal d'émission (32a), un deuxième signal d'émission (32b) et un troisième signal d'émission sont générés, le deuxième signal d'émission (32b) et le troisième signal d'émission (32c) étant codés au moyen d'une modulation de phase par rapport au premier signal d'émission (32a) de telle sorte qu'une orthogonalité signalétique est obtenue entre le premier signal d'émission (32a), le deuxième signal d'émission (32b) et le troisième signal d'émission (32c).

14. Procédé selon la revendication 13, **caractérisé en ce que** le deuxième signal d'émission (32b) est codé au moyen d'une modulation de phase en quadrature.

15. Procédé selon l'une des revendications précédentes, **caractérisé en ce que** lors de la modulation de phase de plusieurs deuxièmes signaux d'émission (32b, 32c), des incréments de phase ou des décréments de phase différents sont utilisés pour les deuxièmes signaux d'émission (32b, 32c) respectifs.

16. Procédé selon l'une des revendications précédentes, **caractérisé en ce qu'**au moins un premier signal d'émission (32a) est émis avec une phase constante et au moins un deuxième signal d'émission (32b, 32c) avec une phase changeante.

17. Procédé selon l'une des revendications précédentes, **caractérisé en ce que** le procédé est exécuté plusieurs fois successivement, notamment de manière cyclique.

18. Système radar (12), notamment d'une véhicule (10), pour déterminer au moins une information d'objet d'au moins un objet (18), comprenant au moins deux émetteurs (26a, 26b, 26c) destinés à envoyer des signaux d'émission (32a, 32b, 32c) dans une zone de surveillance (14), au moins un récepteur (30a, 30b) destiné à recevoir les échos des signaux d'émission (32a, 32b, 32c) réfléchis sur l'au moins un objet (18) sous la forme de signaux de réception (34a, 34b, 34c) et au moins un dispositif de commande et/ou d'interprétation (28) destiné à commander l'au moins un émetteur (26a, 26b, 26c) et l'au moins un récepteur (30a, 30b), l'au moins un dispositif de commande et/ou d'interprétation (28) possédant des moyens pour déterminer au moins un signal de cible (38a, 38b, 38b) à partir d'au moins une transformée de Fourier discrète bidimensionnelle des signaux de réception (34a, 34b, 34b) et pour déterminer au moins une information d'objet à partir d'au moins un signal de cible (38a, 38b, 38b), notamment pour mettre en œuvre le procédé selon l'une des revendications précédentes, les moyens de l'au moins un dispositif de commande et/ou d'interprétation (28) étant adaptés pour commander le système radar (12) de telle sorte que
- au moins un premier signal d'émission (32a) et au moins un deuxième signal d'émission (32b, 32c) peuvent être générés à partir d'un signal à onde entretenue modulé en fréquence, l'au moins un deuxième signal d'émission (32b, 32c) pouvant être codé au moyen d'une modulation de phase par rapport à l'au moins un premier signal d'émission (32a), la position de phase de l'au moins un deuxième signal d'émission (32b, 32c) pouvant être respectivement incrémentée ou décrémentée d'un montant constant d'une rampe de fréquence vers la suivante,
l'au moins un premier signal d'émission (32a) peut être émis par l'au moins un premier émetteur (26) et l'au moins un deuxième signal d'émission (32b, 32c) par l'au moins un deuxième émetteur (26b, 26c) simultanément dans la zone de surveillance (14) du système radar (12), l'au moins un deuxième signal d'émission (32b, 32c) pouvant être codé du côté de l'émetteur au moyen d'une manipulation par déplacement de phase de niveau supérieur.

19. Système d'assistance au conducteur (20) d'un véhicule (10), comprenant au moins un dispositif de commande électronique (24) destiné à commander des dispositifs fonctionnels (22) du véhicule (10) en fonction d'informations qui sont fournies par au moins un système radar (12), et comprenant au moins un système radar (12) destiné à déterminer au moins une information d'objet d'au moins un objet (18), comprenant au moins deux émetteurs (26a, 26b, 26c) destinés à envoyer des signaux d'émission (32a, 32b, 32c) dans une zone de surveillance (14), au moins un récepteur (30a, 30b) destiné à recevoir les échos des signaux d'émission (32a, 32b, 32c) réfléchis sur l'au moins un objet (18) sous la forme de signaux de réception (34a, 34b, 34c) et au moins un dispositif de commande et/ou d'interprétation (28) destiné à commander l'au moins un émetteur (26a, 26b, 26c) et l'au moins un récepteur (30a, 30b), l'au moins un dispositif de commande et/ou d'interprétation (28) possédant des moyens pour déterminer au moins un signal de cible (38a, 38b, 38b) à partir d'au moins une transformée de Fourier discrète bidimensionnelle des signaux de réception (34a, 34b, 34b) et pour déterminer au moins une information d'objet à partir d'au moins un signal de cible (38a, 38b, 38b), notamment pour mettre en œuvre le procédé selon l'une des revendications 1 à 12, les moyens de l'au moins un dispositif de commande et/ou d'interprétation (28) étant adaptés pour commander le système radar (12) de telle sorte que
- au moins un premier signal d'émission (32a) et au moins un deuxième signal d'émission (32b, 32c) peuvent être générés à partir d'un signal à onde entretenue modulé en fréquence, l'au moins un deuxième signal d'émission (32b, 32c) pouvant être codé au moyen d'une modulation de phase par rapport à l'au moins un premier signal d'émission (32a), la position de phase de l'au moins un deuxième signal d'émission (32b, 32c) pouvant être respectivement incrémentée ou décrémentée d'un montant constant d'une rampe de fréquence vers la suivante,
- l'au moins un premier signal d'émission (32a) peut être émis par l'au moins un premier émetteur (26a) et l'au moins un deuxième signal d'émission (32b, 32c) par l'au moins un deuxième émetteur (26b, 26c) simultanément dans la zone de surveillance (14) du système radar (12),
- l'au moins un deuxième signal d'émission (32b, 32c) pouvant être codé du côté de l'émetteur au moyen d'une manipulation par déplacement de phase de niveau supérieur.
